(19) **Europäisches Patentamt**
**European Patent Office**
**Office européen des brevets**

(11) **EP 3 769 105 B1**

(12) **FASCICULE DE BREVET EUROPEEN**

(45) Date de publication et mention
de la délivrance du brevet:
**28.01.2026 Bulletin 2026/05**

(21) Numéro de dépôt: **19710713.9**

(22) Date de dépôt: **20.03.2019**

(51) Classification Internationale des Brevets (IPC):
*G01S 5/02* $^{(2010.01)}$

(52) Classification Coopérative des Brevets (CPC):
**G01S 5/0252; G01S 5/0284**

(86) Numéro de dépôt international:
**PCT/EP2019/056917**

(87) Numéro de publication internationale:
**WO 2019/180063 (26.09.2019 Gazette 2019/39)**

(54) **PROCÉDÉ ET SYSTÈME DE GÉOLOCALISATION DE TERMINAUX ÉVOLUANT EN GROUPE**

VERFAHREN UND SYSTEM ZUR GEOLOKATION VON
GRUPPENENTWICKLUNGSENDGERÄTEN

METHOD AND SYSTEM FOR GEOLOCATION OF GROUP-EVOLVING TERMINALS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.03.2018 FR 1852429**

(43) Date de publication de la demande:
**27.01.2021 Bulletin 2021/04**

(73) Titulaire: **UNABIZ**
**31670 Labège (FR)**

(72) Inventeurs:
• **ISSON, Olivier**
**31650 Lauzerville (FR)**
• **MARTY, Renaud**
**31520 RAMONVILLE SAINT AGNE (FR)**
• **DHOUIB, Sofiane**
**69100 VILLEURBANNE (FR)**

(74) Mandataire: **Santarelli**
**Tour Trinity**
**1 bis Place de la Défense**
**92400 Courbevoie (FR)**

(56) Documents cités:
**WO-A1-2015/188324     US-A1- 2012 184 287**

• **TANBO MASAYA ET AL: "Active RFID attached
object clustering method based on RSSI series
for finding lost objects", 2015 IEEE 2ND WORLD
FORUM ON INTERNET OF THINGS (WF-IOT),
IEEE, 14 December 2015 (2015-12-14), pages 363
- 368, XP032854087, DOI: 10.1109/WF-
IOT.2015.7389081**
• **YE XUEHAN ET AL: "WarpMap: Accurate and
Efficient Indoor Location by Dynamic Warping in
Sequence-Type Radio-Map", 2016 13TH ANNUAL
IEEE INTERNATIONAL CONFERENCE ON
SENSING, COMMUNICATION, AND
NETWORKING (SECON), IEEE, 27 June 2016
(2016-06-27), pages 1 - 9, XP032994042, DOI:
10.1109/SAHCN.2016.7733026**

**Description**

<u>**DOMAINE TECHNIQUE**</u>

La présente invention appartient au domaine de la géolocalisation. Notamment, l'invention concerne un procédé et un système de géolocalisation d'un terminal d'un système de communication sans fil. L'invention s'applique particulièrement bien à la géolocalisation d'objets communicants de type « Internet des Objets » (de l'anglais « *Internet Of Things* » ou IoT) qui ont une propension à se déplacer en groupe.

<u>**ÉTAT DE LA TECHNIQUE**</u>

Au cours des dernières années, l'utilisation croissante des systèmes de communication sans fil a naturellement conduit à développer des services basés sur la position géographique d'un objet et utilisés par exemple pour l'aide à la navigation, la gestion du trafic, le suivi d'acheminement de marchandises, etc.

Les systèmes de positionnement par satellites comme le GPS (« *Global Positioning System* ») comptent parmi les techniques de géolocalisation les plus connues. Ces systèmes reposent sur l'exploitation par un terminal récepteur de signaux radio émis par des satellites dédiés. La géolocalisation par satellite est particulièrement précise, mais elle souffre de plusieurs inconvénients, notamment le coût et la consommation électrique induits par l'intégration d'un récepteur GPS dans un objet, ainsi que son manque de performance dans des zones fermées.

D'autres techniques existent pour géolocaliser un terminal à partir de signaux échangés avec les stations de base d'un réseau d'accès auquel il est connecté. Dans les réseaux cellulaires, comme par exemple le GSM (« *Global System for Mobile Communications* »), il est connu d'estimer la position d'un terminal comme étant celle de la station de base à laquelle il est actuellement associé. Cette méthode présente cependant une précision de géolocalisation médiocre puisque la zone de couverture d'une station de base peut atteindre plusieurs kilomètres, voire plusieurs dizaines de kilomètres de rayon.

D'autres méthodes consistent à estimer les distances qui séparent un terminal de plusieurs stations de base en calculant des temps d'arrivée, des angles de propagation ou des différences de fréquence pour les signaux échangés entre le terminal et les stations de base. Ces différentes méthodes présentent cependant toutes l'inconvénient de nécessiter du matériel et du logiciel spécifiques. Elles requièrent en effet généralement une synchronisation des terminaux et/ou des différentes stations de base jouant le rôle de points d'observation. En outre, elles sont particulièrement sensibles au phénomène dit de multi-trajet (propagation d'un même signal radio par plusieurs chemins à cause des phénomènes de réflexion, réfraction et diffraction sur les obstacles rencontrés).

D'autres méthodes de géolocalisation se basent sur le niveau de puissance reçue (RSSI, de l'anglais « *Received Signal Strength Indicator* ») d'un signal échangé entre un terminal et une station de base. Ces méthodes sont particulièrement bien adaptées aux systèmes de communication sans fil de type réseaux cellulaires (comme par exemple le GSM) pour lesquels l'information de RSSI est directement disponible car elle est exploitée par le système de communication lui-même. Ces méthodes reposent sur le fait qu'un signal radio est atténué dans l'atmosphère et donc que le niveau de RSSI d'un signal reçu par un récepteur varie en fonction de la distance qui sépare le récepteur de l'émetteur du signal. Ainsi, il est possible de déterminer la position géographique d'un terminal par trilatération en estimant la distance séparant le terminal des différentes stations de base qui l'entourent à partir des niveaux de RSSI mesurés par les stations de base. L'inconvénient d'une telle méthode de géolocalisation par trilatération basée sur les niveaux de RSSI est son manque de précision dû au fait que les nombreux paramètres qui influent sur l'atténuation du signal (obstacles, interférences radio, position et mouvement du terminal, etc.) rendent très complexe la fonction qui définit la distance à partir d'un niveau de RSSI.

De nouveaux procédés de géolocalisation basés sur les niveaux de RSSI ont alors été développés. Ces nouveaux procédés reposent sur des techniques d'apprentissage automatique. Concrètement, il s'agit de construire, pendant une phase de calibration, une base de données qui associe à des positions géographiques connues une signature radio correspondant à l'ensemble des niveaux de RSSI mesurés pour un terminal à une position connue pour un ensemble de stations de base du système. Ensuite, pendant une phase de recherche, une signature radio observée pour un terminal situé à une position inconnue est comparée à l'ensemble des signatures de la base de données afin d'estimer la position du terminal à partir de la (ou des) position(s) correspondant à la (aux) signature(s) la (les) plus ressemblante(s).

Pour réaliser la phase de calibration, il est connu d'embarquer dans une flotte de véhicules qui parcourent la zone géographique à couvrir des appareils adaptés pour fournir avec précision la position géographique et les niveaux de RSSI pour les stations de base du système de communication en différents points (le terme anglais pour qualifier cette phase est « *war-driving* »). Plus le nombre de points est important, meilleures seront les performances du procédé de géolocalisation en termes de précision, mais plus la phase de calibration sera longue et coûteuse.

De telles méthodes de géolocalisation par apprentissage automatique à partir de signatures radio présentent cependant plusieurs inconvénients, notamment dans le cas où la zone géographique à couvrir est vaste, par exemple s'il faut couvrir tout un pays, voire un continent. Un premier inconvénient concerne la précision de géolocalisation. Il arrive en effet que deux signatures radio correspondant à deux positions géographiques voisines soient significativement différentes, ou bien que deux signatures radio particulièrement ressemblantes correspondent à deux positions géographiques éloignées. L'établissement d'une relation entre une signature radio et une position géographique associée est ainsi rendu difficile à cause du bruit généré par de telles situations. Un autre inconvénient concerne la complexité de l'algorithme d'apprentissage automatique utilisé. En effet, pour obtenir une précision suffisante, il est nécessaire d'insérer un grand nombre d'éléments dans la base de données construite pendant la phase de calibration. De plus, si la zone à couvrir est vaste, il y a un grand nombre de stations de base à prendre en compte. Tout ceci concourt à augmenter considérablement les données en entrée de l'algorithme d'apprentissage automatique, et ainsi à créer des contraintes de capacité et de temps de calcul. Le document WO 2015/188324 A1 décrit un appareil permettant de prédire la position future d'un terminal mobile à partir des informations de trajectoire historiques de plusieurs terminaux mobiles.

## EXPOSÉ DE L'INVENTION

La présente invention a pour objectif de remédier à tout ou partie des inconvénients de l'art antérieur, notamment ceux exposés ci-avant, en proposant un procédé de géolocalisation d'un terminal d'un système de communication sans fil dont les performances en termes de précision et de complexité sont améliorées en se basant sur l'idée que des terminaux du système peuvent évoluer en groupes.

Les méthodes conventionnelles de géolocalisation utilisant une signature radio d'un terminal pour estimer sa position géographique se concentrent en effet uniquement sur des informations liées à une relation existant entre le terminal et un réseau d'accès du système de communication, comme par exemple des niveaux de RSSI ou des temps de propagation de signaux échangés entre le terminal et le réseau d'accès.

La méthode de géolocalisation proposée par la présente invention se démarque de l'art antérieur dans la mesure où elle utilise en plus des informations provenant des terminaux du système qui permettent de déterminer par exemple si un terminal dont on cherche à estimer la position géographique s'est déplacé en groupe avec d'autres terminaux pendant une certaine période d'observation. Si tel est le cas, il est par exemple possible d'estimer la position géographique dudit terminal en utilisant des informations relatives à d'autres terminaux du groupe.

La présente invention trouve une application particulièrement avantageuse, bien que nullement limitative, dans le domaine du transport de marchandises. Il est par exemple possible d'équiper des palettes utilisées pour le transport de marchandises avec des terminaux d'un système de communication sans fil afin de pouvoir les géolocaliser. De telles palettes ont en effet une certaine propension à être déplacées en groupe.

Ainsi, selon un premier aspect, il est proposé par la présente invention un procédé d'estimation de la position géographique d'un terminal, dit « terminal d'intérêt », parmi un panel de terminaux d'un système de communication sans fil. Ledit procédé comporte :

- une détermination, pour chaque terminal dudit panel, d'une signature temporelle comportant des valeurs représentatives de phases de mobilité dudit terminal mesurées de façon autonome par le terminal par au moins un capteur du terminal pendant une durée d'observation prédéterminée,
- un calcul de valeurs d'un critère de similarité entre les signatures temporelles des terminaux du panel, une valeur dudit critère de similarité calculée pour deux terminaux étant représentative de la probabilité pour lesdits terminaux de s'être déplacés ensemble ou d'avoir été localisés au même endroit pendant ladite période d'observation,
- un partitionnement des différents terminaux du panel en différents groupes en fonction des valeurs du critère de similarité,
- une estimation de la position géographique du terminal d'intérêt en fonction de données de géolocalisation disponibles pour au moins un autre terminal du groupe, dit « groupe d'intérêt », auquel le terminal d'intérêt appartient.

Le panel de terminaux peut par exemple être déterminé par une sélection des terminaux du système dont on sait a priori qu'ils sont proches du terminal d'intérêt (par exemple s'ils sont sous la couverture d'au moins une station de base du système de communication sans fil qui couvre également le terminal d'intérêt), ou qu'ils ont une certaine propension à appartenir à un groupe de plusieurs terminaux avec lesquels ils présentent des similarités.

Une signature temporelle d'un terminal correspond à un ensemble de valeurs mesurées de façon autonome par le terminal à l'aide d'un capteur du terminal comme par exemple un capteur de mouvement.

On entend par « de façon autonome » que les mesures représentatives de phases de mobilité du terminal réalisées par le terminal pour former une signature temporelle ne dépendent pas du comportement d'un autre dispositif. Notamment, une mesure RSSI n'est pas une mesure réalisée de façon autonome par le terminal car une telle mesure dépend de l'émission d'un signal par un autre dispositif, comme par exemple une station de base. Selon un autre exemple, une position géographique mesurée à partir d'un signal radio émis par un ou plusieurs satellites d'un système de positionnement par satellites n'est pas non plus une mesure réalisée de façon autonome par le terminal.

Si deux signatures temporelles pour deux terminaux ont des similarités importantes, cela signifie que les deux terminaux en question se sont probablement déplacés ensemble, ou bien éventuellement qu'ils sont restés au même endroit, pendant la période d'observation.

Le partitionnement des différents terminaux du panel en différents groupes permet d'améliorer la géolocalisation d'un terminal d'intérêt dont on cherche à estimer la position géographique. En effet, il est par exemple possible d'estimer la position géographique dudit terminal d'intérêt si l'on connait avec précision la position géographique d'au moins l'un des terminaux du groupe, par exemple si un des terminaux du groupe est équipé d'un récepteur GPS. Selon un autre exemple, il est possible d'estimer la position géographique dudit terminal en corrélant des positions estimées de plusieurs terminaux du groupe. Dans certains cas, il est possible d'estimer la position géographique dudit terminal d'intérêt en corrélant des données de géolocalisation (par exemple des positions GPS, et/ou des positions estimées, etc.) relatives à plusieurs terminaux de plusieurs groupes différents. Il convient de noter que ces données de géolocalisation peuvent être des informations qui ne correspondent pas directement à une position géographique mais qui permettent de déterminer ou d'estimer une position géographique (par exemple des temps de propagation d'un signal ou des niveaux de RSSI utilisés par des méthodes de trilatération, etc.),

Dans des modes particuliers de mise en œuvre, l'invention peut comporter en outre l'une ou plusieurs des caractéristiques suivantes, prises isolément ou selon toutes les combinaisons techniquement possibles.

Dans des modes particuliers de mise en œuvre, les valeurs mesurées pour déterminer une signature temporelle d'un terminal comportent :

- des valeurs mesurées par au moins un capteur dudit terminal pendant la période d'observation, et/ou
- des signatures radio comportant des valeurs représentatives de la qualité de liens radio existant entre le terminal et une ou plusieurs stations de base du système de communication sans fil à différents instants pendant la période d'observation.

Dans des modes particuliers de mise en œuvre, les valeurs représentatives de phases de mobilité du terminal mesurées par au moins un capteur dudit terminal comportent :

- des valeurs mesurées par un capteur de mouvement, et/ou
- des valeurs mesurées par un capteur de température, et/ou
- des valeurs mesurées par un capteur de pression atmosphérique, et/ou
- des valeurs mesurées par un capteur de luminosité, et/ou
- des valeurs mesurées par un capteur de champ magnétique.

En effet, selon le type d'application considérée, différentes données environnementales peuvent être utilisées pour déterminer si des terminaux ont évolué ensemble pendant une période d'observation. Par exemple si les conditions environnementales observées pour deux terminaux distincts sont similaires, cela signifie que lesdits terminaux étaient probablement « co-localisés » pendant la période d'observation.

Dans des modes particuliers de mise en œuvre, une signature temporelle d'un terminal comporte en outre des signatures radio comportant des valeurs représentatives de la qualité de liens radio existant entre le terminal et une ou plusieurs stations de base du système de communication sans fil à différents instants pendant la période d'observation, et le critère de similarité est déterminé en fonction d'un critère de similarité relatif aux phases de mobilité et d'un critère de similarité relatif aux signatures radio.

Par exemple, une signature temporelle peut comporter des valeurs représentatives des phases de mobilité d'un terminal pendant la période d'observation déterminées par exemple à l'aide d'un capteur de mouvement tel qu'un accéléromètre ou un gyroscope. En complément, une signature temporelle peut comporter des signatures radio d'un terminal déterminées à différents instants pendant la période d'observation. Si les signatures temporelles de deux terminaux se ressemblent, autrement dit si les valeurs et/ou les signatures radio qui les composent remplissent certaines conditions de similarité, alors les deux terminaux peuvent probablement être considérés comme appartenant à un même groupe de terminaux qui se sont déplacés ensemble au cours de la période d'observation.

Dans des modes particuliers de mise en œuvre, un critère de similarité est déterminé en fonction d'un facteur de pondération affecté à une valeur mesurée représentatif du temps écoulé entre l'instant où ladite valeur est mesurée et l'instant d'estimation de la position géographique du terminal d'intérêt.

De telles dispositions permettent d'accorder plus d'importance aux données récentes d'une signature temporelle. En effet, si par exemple deux terminaux se sont déplacés ensemble pendant seulement une partie de la période d'observation, il convient d'accorder plus d'importance aux données récentes afin de déterminer si à la fin de la période d'observation, c'est-à-dire au moment où l'estimation de la position géographique du terminal d'intérêt est faite, les terminaux en question sont ensemble ou non, c'est-à-dire si oui ou non il faut considérer qu'ils appartiennent à un même groupe.

**EP 3 769 105 B1**

Dans des modes particuliers de mise en œuvre, le partitionnement des différents terminaux du panel est fait de sorte que chaque terminal appartient au plus à un groupe.

Un tel partitionnement est par exemple mis en œuvre par des méthodes de regroupement d'éléments connues sous le terme anglais « *hard clustering* », pour lesquelles chaque élément appartient à un unique groupe, ou bien il n'appartient à aucun groupe (élément isolé).

Dans des modes particuliers de mise en œuvre, le partitionnement des différents terminaux du panel est fait de sorte que chaque terminal appartient à chaque groupe selon une valeur de probabilité d'appartenance, le groupe d'intérêt correspondant au groupe pour lequel la valeur de probabilité d'appartenance du terminal d'intérêt est la plus grande.

Un tel partitionnement est par exemple mise en œuvre par des méthodes de regroupement d'éléments connues sous le terme anglais « *soft clustering* », pour lesquelles chaque élément appartient à plusieurs groupes avec un certain degré défini par des méthodes probabilistes.

Dans des modes particuliers de mise en œuvre, la position géographique du terminal d'intérêt est estimée en fonction de données de géolocalisation disponibles pour différents terminaux appartenant à différents groupes et en fonction des valeurs de probabilité d'appartenance du terminal d'intérêt aux différents groupes.

Dans des modes particuliers de mise en œuvre, lesdites données de géolocalisation sont fournies par un terminal sous la forme d'une position géographique obtenue par un système de positionnement par satellites dudit terminal.

Si certains terminaux du système sont équipés d'un récepteur GPS, il peut être possible de déterminer la position géographique du terminal d'intérêt à l'aide d'une position GPS fourni par l'un des terminaux du groupe d'intérêt auquel le terminal d'intérêt appartient, ou bien à l'aide de plusieurs positions GPS fournies par plusieurs terminaux du groupe d'intérêt, voire à l'aide de plusieurs positions GPS fournies par plusieurs terminaux de plusieurs groupes différents.

Dans des modes particuliers de mise en œuvre, les données de géolocalisation sont disponibles pour un terminal sous la forme d'une signature radio comportant des valeurs représentatives de la qualité de liens radio existant entre ledit terminal et une ou plusieurs stations de base du système de communication sans fil.

Dans des modes particuliers de mise en œuvre, une position géographique d'un terminal du panel est estimée en fonction de la signature radio dudit terminal et d'un ensemble de référence comportant des signatures radio associées à des positions géographiques connues. La position géographique du terminal d'intérêt est alors estimée en fonction de la position géographique estimée d'au moins un autre terminal du groupe d'intérêt.

Cet ensemble de référence est par exemple une base de données mémorisant des éléments de référence utilisée par un algorithme d'apprentissage automatique. Chaque élément de référence est alors un couple d'information constitué d'une part par une signature radio, et d'autre part par une position géographique connue associée à cette signature radio. L'algorithme d'apprentissage permet d'estimer la position d'un terminal d'intérêt à partir d'une signature radio dudit terminal d'intérêt, et à l'aide de la base de données de référence. Pour réduire la complexité du procédé de géolocalisation, il peut alors suffire d'estimer la position géographique d'un seul terminal d'un groupe donné et considérer que tous les terminaux du groupe ont la même position géographique.

Selon un autre exemple, pour améliorer la précision du procédé de géolocalisation, il peut être avantageux de corréler les positions géographiques estimées de plusieurs terminaux du groupe d'intérêt afin d'affiner la position géographique de chaque terminal du groupe, et notamment celle du terminal d'intérêt.

Dans des modes particuliers de mise en œuvre, une signature radio virtuelle est déterminée pour le groupe d'intérêt en fonction des signatures radio des terminaux appartenant audit groupe d'intérêt, et la position du terminal d'intérêt est estimée en fonction de ladite signature radio virtuelle.

Il s'agit par exemple dans ce cas de corréler les signatures radio de plusieurs terminaux du groupe d'intérêt pour déterminer une signature radio virtuelle utilisée pour estimer une position géographique qui est attribuée à tous les terminaux du groupe, et notamment au terminal d'intérêt.

Dans des modes particuliers de mise en œuvre, ledit panel de terminaux est déterminé par une étape de sélection parmi les terminaux du système de communication sans fil de sorte qu'un terminal du panel est couvert par au moins une station de base du système de communication sans fil couvrant également le terminal d'intérêt.

Selon un deuxième aspect, la présente invention concerne un système de communication sans fil comportant des terminaux, et un réseau d'accès comportant des stations de base et un serveur relié auxdites stations de base. Ledit système met en œuvre un procédé de géolocalisation d'un terminal d'intérêt, parmi un panel de terminaux, selon l'un quelconque des modes de mises en œuvre précédents. Ledit serveur est configuré pour :

- collecter des valeurs représentatives de phases de mobilité d'un terminal dudit panel mesurées de façon autonome par ledit terminal par au moins un capteur du terminal pendant une durée d'observation prédéterminée,
- déterminer une signature temporelle pour ledit terminal à partir des valeurs mesurées,
- calculer des valeurs d'un critère de similarité entre les signatures temporelles des terminaux du panel, une valeur dudit critère de similarité calculée pour deux terminaux étant représentative de la probabilité pour lesdits terminaux de s'être déplacés ensemble pendant ladite période d'observation,

5

- partitionner les différents terminaux du panel en différents groupes en fonction des valeurs du critère de similarité,
- estimer la position géographique du terminal d'intérêt en fonction de données de géolocalisation disponibles pour au moins un autre terminal du groupe, dit « groupe d'intérêt », auquel le terminal d'intérêt appartient.

## PRÉSENTATION DES FIGURES

L'invention sera mieux comprise à la lecture de la description suivante, donnée à titre d'exemple nullement limitatif, et faite en se référant aux figures 1 à 7 qui représentent :

- Figure 1 : une représentation schématique d'un système de communication sans fil,
- Figure 2 : les étapes principales d'un procédé conventionnel de géolocalisation,
- Figure 3 : les étapes principales d'un procédé de géolocalisation selon l'invention,
- Figure 4 : une représentation schématique de phases de mobilité déterminées par un terminal,
- Figure 5 : une représentation schématique de la pression atmosphérique mesurée par un terminal,
- Figure 6 : une représentation schématique de la température mesurée par un terminal,
- Figure 7 : une représentation schématique de signatures radio déterminées pour un terminal,

Dans ces figures, des références identiques d'une figure à une autre désignent des éléments identiques ou analogues. Pour des raisons de clarté, les éléments représentés ne sont pas nécessairement à une même échelle, sauf mention contraire.

## DESCRIPTION DÉTAILLÉE DE MODES DE RÉALISATION

La description ci-après décrit à titre d'exemple et de manière nullement limitative plusieurs modes de mise en œuvre de l'invention.

### 1. Le contexte

Dans la suite de la description, on se place de manière non limitative dans le cas où des terminaux de type objets connectés d'un système de communication sans fil sont fixés à des palettes de marchandises dans le but de pouvoir les géolocaliser. De telles palettes sont généralement déplacées en groupe, selon la destination des marchandises qu'elles comportent.

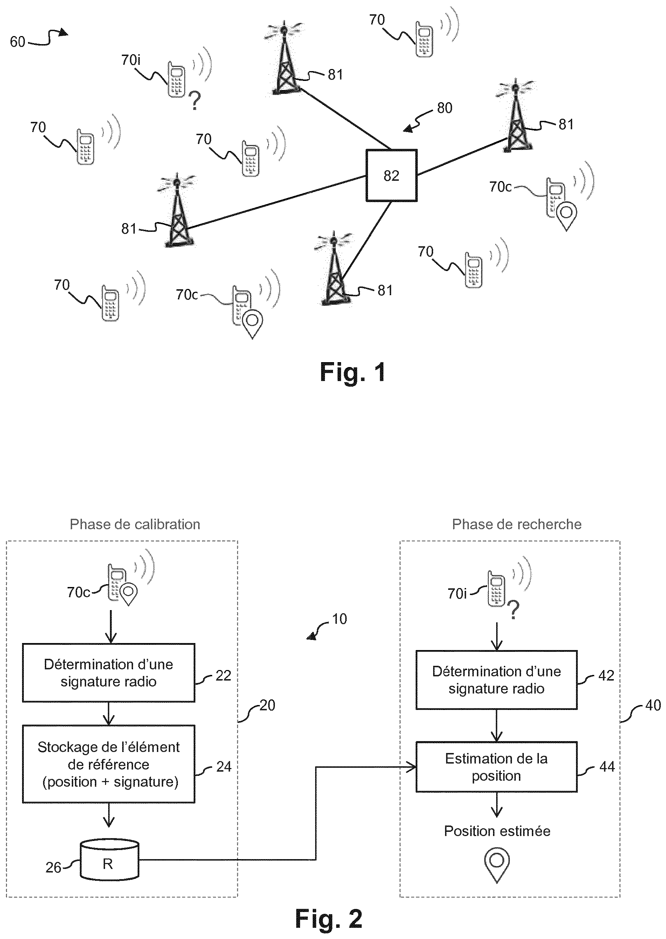

La figure 1 représente schématiquement un système 60 de communication sans fil, comportant des terminaux 70 et un réseau d'accès 80 comportant par exemple une pluralité de stations de base 81 reliées à un serveur 82.

Les terminaux 70 et les stations de base 81 échangent des données sous la forme de signaux radioélectriques. Par « signal radioélectrique », on entend une onde électromagnétique se propageant en espace libre, dont les fréquences sont comprises dans le spectre traditionnel des ondes radioélectriques (quelques hertz à plusieurs centaines de gigahertz).

Les échanges de données entre un terminal 70 et les stations de base 81 sont par exemple bidirectionnels. En d'autres termes, un terminal 70 est adapté à émettre des données sur un lien montant à destination des stations de base 81, et à recevoir des données sur un lien descendant depuis lesdites stations de base 81 vers ledit terminal 70.

Rien n'exclut cependant, suivant d'autres exemples, d'avoir des échanges unidirectionnels, uniquement sur le lien montant. De nombreuses applications du type IoT consistent en de la collecte de données émises par des terminaux 70 et s'accommodent parfaitement d'échanges uniquement sur le lien montant entre chaque terminal 70 et les stations de base 81.

Suivant un exemple non limitatif, le système 60 de communication sans fil est à bande ultra étroite. Par « bande ultra étroite » (« Ultra Narrow Band » ou UNB dans la littérature anglo-saxonne), on entend que le spectre fréquentiel instantané des signaux émis par les terminaux 70 est de largeur fréquentielle inférieure à deux kilohertz, voire inférieure à un kilohertz. De telles dispositions sont particulièrement avantageuses en ce que l'émission de tels signaux peut être réalisée avec une consommation électrique très réduite, particulièrement adaptée pour des applications du type IoT.

Chaque station de base 81 est adaptée à recevoir des messages émis par des terminaux 70 qui se trouvent à sa portée. Chaque message ainsi reçu est par exemple transmis au serveur 82 du réseau d'accès 80, éventuellement accompagné d'autres informations comme un identifiant de la station de base 81 qui l'a reçu, une valeur représentative de la qualité du signal radio transportant le message, la fréquence centrale sur laquelle le message a été reçu, une date à laquelle le message a été reçu, etc. Le serveur 82 traite par exemple l'ensemble des messages reçus des différentes stations de base 81.

Pour estimer la position géographique d'un terminal 70, dit « terminal 70i d'intérêt », il est connu par exemple d'utiliser un procédé de géolocalisation basé sur des algorithmes d'apprentissage automatique cherchant à établir une relation entre une signature radio d'un terminal et la position géographique dudit terminal. Le serveur 82 peut notamment être utilisé pour la mise en œuvre d'un tel procédé de géolocalisation.

Dans la suite de la description, on se place à titre d'exemple nullement limitatif dans le cas où l'invention améliore un tel procédé de géolocalisation existant basé sur un algorithme d'apprentissage automatique qui vise à établir une relation entre une signature radio d'un terminal et la position géographique dudit terminal.

Il convient de noter cependant qu'il existe d'autres méthodes pour estimer la position d'un terminal 70i d'intérêt, et en particulier des méthodes qui ne sont pas nécessairement basées sur des algorithmes d'apprentissage automatique, comme par exemple des méthodes de trilatération qui permettent de déterminer une position géographique à partir de calculs de différence de temps de propagation d'un signal (« Time Difference Of Arrival » ou TDOA dans la littérature anglo-saxonne). Le procédé selon l'invention est également applicable à de telles méthodes.

Par « position géographique », on entend dans la suite de la description un ensemble de deux coordonnées correspondant respectivement à la latitude et la longitude. Il convient de noter que des variantes pourraient être envisagées pour définir une position géographique. Par exemple, une troisième coordonnée correspondant à l'altitude par rapport au niveau moyen de la mer pourrait également être prise en compte.

La signature radio d'un terminal 70 est par exemple déterminée lors de l'émission d'un message dudit terminal 70 à destination du réseau d'accès 80. Par exemple, la signature radio comporte un ensemble de valeurs correspondant à des niveaux de puissance moyenne reçue (RSSI) mesurés par les différentes stations de base (par exemple en décibel) à la réception dudit message. Pour les stations de base 81 qui n'ont pas reçu le message, par exemple parce que le terminal 70 est trop éloigné et ne se trouve pas sous leur couverture radio, une valeur par défaut de -160 dB est par exemple utilisée.

Il convient de noter que d'autres méthodes peuvent être envisagées pour déterminer une signature radio. Par exemple, d'autres valeurs représentatives de la qualité des liens radio existant entre un terminal 70 et les stations de base 81 lors de l'émission d'un message pourraient être utilisées pour déterminer une signature radio, comme par exemple un rapport signal sur bruit du signal (SNR ou « Signal on Noise Ratio » dans la littérature anglo-saxonne) ou bien un indicateur de qualité du canal de communication (CQI ou « Channel Quality Indicator » dans la littérature anglo-saxonne). Selon un autre exemple, une signature radio peut comporter des temps de propagation d'un signal transportant un message échangé entre un terminal 70 et une station de base 81. Le choix d'une méthode particulière pour déterminer une signature radio ne constitue qu'une variante de mise en œuvre de l'invention.

Pour estimer la position géographique d'un terminal 70i d'intérêt, le procédé de géolocalisation utilise un ensemble d'éléments de référence. Chaque élément de référence comporte une signature radio associée à une position géographique. Pour construire l'ensemble d'éléments de référence, il est par exemple possible d'utiliser certains terminaux 70 du système 60 de communication sans fil, dits « terminaux 70c de calibration », qui possèdent un système de positionnement, par exemple un récepteur GPS, qui permet d'obtenir avec précision la position géographique du terminal 70c.

De manière conventionnelle, cet ensemble de référence est par exemple une base de données mémorisée au niveau du serveur 82 et utilisée par un algorithme d'apprentissage automatique. Chaque élément de référence stocké dans cette base de données est un couple d'information constitué d'une part par une signature radio, et d'autre part par une position géographique connue associée à cette signature radio. La signature radio et la position géographique connue d'un élément de référence est obtenu à partir d'un terminal 70c de calibration. L'algorithme d'apprentissage permet alors d'estimer la position d'un terminal 70i d'intérêt à partir d'une signature radio dudit terminal 70i d'intérêt, et à l'aide de la base de données.

La figure 2 représente les principales étapes d'un tel procédé 10 de géolocalisation.

Une première phase 20 de calibration a pour objectif de réaliser une sorte de cartographie radio de la zone géographique à couvrir. Cette phase comporte :

- une étape de détermination 22 de signatures radio associées respectivement à des positions géographiques,
- une étape de stockage 24 de l'élément de référence obtenu (association d'une signature radio et d'une position géographique) dans un ensemble 26 d'éléments de référence.

L'étape de détermination 22 d'une signature radio consiste par exemple en l'émission par un terminal 70c de calibration d'un message contenant la position géographique courante à destination du réseau d'accès 80 du système 60 de communication sans fil.

Il est à noter que ce message peut être émis de manière indépendante au procédé 10 de géolocalisation. Par exemple, il peut s'agir d'un message de télérelève d'informations conventionnel incluant la position géographique courante et n'ayant pas pour objectif premier de participer à la phase 20 de calibration du procédé 10 de géolocalisation.

Les stations de base 81 du réseau d'accès 80 qui ont reçu le signal contenant ledit message font alors une mesure du niveau RSSI auquel le message a été reçu et transmettent le message et des informations supplémentaires (niveau de RSSI, date de réception du message, identifiant de la station de base, etc.) au serveur 82.

Le serveur 82 collecte les niveaux de RSSI mesurés par les différentes stations de base 81 et les inclut dans la signature radio ainsi déterminée pour le terminal 70c de calibration.

Il convient de noter que plusieurs méthodes sont possibles pour le choix des stations de base à prendre en compte pour la formation d'une signature radio. Selon un premier exemple, toutes les stations de base du système 60 de communication sans fil sont considérées. Selon un autre exemple, il est possible de limiter le nombre de stations de base à prendre en compte, par exemple en fonction d'une zone géographique limitée à laquelle on s'intéresse.

Le serveur 82 procède aussi à l'extraction de la position géographique courante contenue dans le message émis par le terminal 70c de calibration et transmis au serveur 82 par les stations de base 81 qui l'ont reçu.

Finalement, le couple d'information formé par la position géographique du terminal 70c de calibration et la signature radio associée est ajouté à l'ensemble 26 des éléments de référence à travers l'étape de stockage 24. Le serveur 82 comporte par exemple un ensemble de moyens matériels et logiciels pour mémoriser les éléments de référence dans une base de données.

Dans des modes particuliers de mise en œuvre, les étapes de la phase 20 de calibration décrites ci-avant sont répétées pendant une durée prédéfinie, par exemple pendant plusieurs jours, voire plusieurs semaines ou plusieurs mois, pour des terminaux 70c de calibration du système 60 de communication sans fil, ceci afin d'obtenir un ensemble 26 d'éléments de référence contenant un nombre conséquent d'informations, c'est-à-dire une cartographie précise de la zone à couvrir. Dans une variante, les étapes de la phase 20 de calibration sont répétées jusqu'à obtenir un nombre prédéfini d'éléments de référence dans l'ensemble 26.

Dans un mode préféré de mise en œuvre, l'ensemble 26 des données de référence est continuellement enrichi par de nouveaux éléments de référence provenant des terminaux 70c de calibration.

Ensuite, une phase 40 de recherche comporte :

- une étape de détermination 42 d'une signature radio pour un terminal 70i d'intérêt situé à une position géographique à estimer,
- une étape d'estimation 44 de la position géographique dudit terminal 70i d'intérêt à partir de la signature radio déterminée et de l'ensemble 26 d'éléments de référence acquis pendant la phase 20 de calibration.

L'étape de détermination 42 d'une signature radio consiste par exemple en l'émission d'un message par un terminal 70i d'intérêt à destination du réseau d'accès 80 du système 60 de communication sans fil. Ce message peut être un message quelconque émis de manière indépendante au procédé 10 de géolocalisation du terminal. Par exemple, ce message peut être émis à des fins de télérelève d'informations qui n'ont rien à voir avec la géolocalisation du terminal 70. Alternativement, ce message peut être émis intentionnellement dans le but de géolocaliser le terminal 70. Dans tous les cas, le contenu du message n'a pas nécessairement d'importance dans la phase 40 de recherche.

Similairement à ce qui est fait pour la phase 20 de calibration, les stations de base 81 du réseau d'accès 80 qui ont reçu ledit message procèdent à une mesure du niveau de RSSI du signal transportant le message.

Le serveur 82 collecte alors les niveaux de RSSI mesurés par les différentes stations de base 81 et les inclut dans la signature radio ainsi déterminée pour le terminal 70i d'intérêt.

L'estimation 44 de la position géographique du terminal 70i d'intérêt ayant émis le message est alors effectuée, par exemple à l'aide d'un algorithme d'apprentissage automatique de régression, à partir d'une part de l'ensemble 26 d'éléments de référence, et d'autre part de la signature radio déterminée pour le terminal 70i d'intérêt dont la position géographique doit être estimée.

Le procédé 10 de géolocalisation décrit ci-avant présente cependant des performances médiocres en termes de précision de géolocalisation et il est particulièrement complexe (c'est-à-dire qu'il nécessite des capacités et des temps de calcul importants), notamment dans le cas où la zone géographique à couvrir est vaste, par exemple s'il faut couvrir tout un pays, voire un continent.

## 2. Le principe de l'invention

Pour améliorer la précision et/ou pour simplifier la complexité du procédé 10 de géolocalisation, la présente invention se base sur l'idée que les terminaux 70 du système considéré peuvent se déplacer en groupes. L'invention propose ainsi un procédé 10 de géolocalisation d'un terminal 70i d'intérêt qui tire profit des informations fournies par d'autres terminaux 70 qui se sont déplacés conjointement avec le terminal 70i d'intérêt pendant une certaine période.

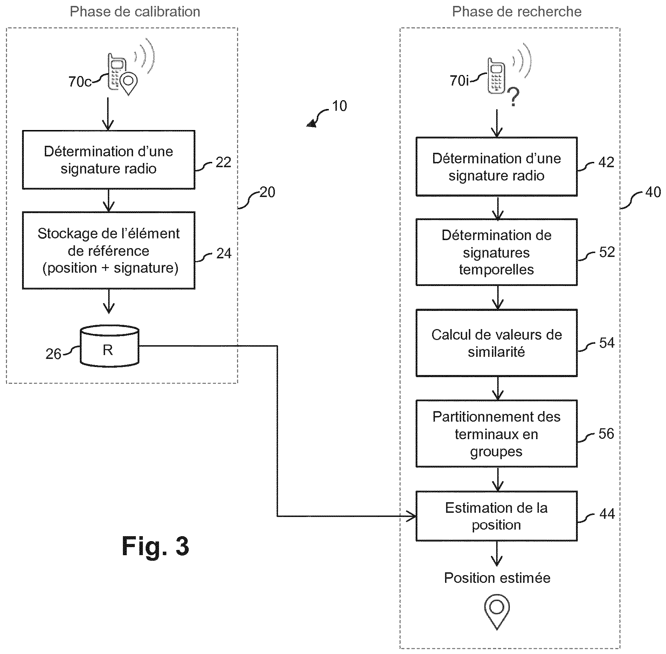

La figure 3 représente les principales étapes d'un mode particulier de mise en œuvre d'un procédé 10 de géolocalisation selon l'invention. Il est à noter que l'ordre des différentes étapes représentées sur la figure 3 est donné à titre illustratif uniquement, à des fins de clarté de la figure, et ne saurait être considéré comme limitatif de l'invention.

Pour le procédé 10 de géolocalisation considéré et présentement décrit à titre d'exemple, la phase 20 de calibration est similaire à celle décrite ci-avant en référence à la figure 2. La phase 40 de recherche comporte en revanche des étapes supplémentaires qui visent à former des groupes de terminaux 70, chaque groupe comportant des terminaux 70 pour lesquels on considère qu'ils se sont déplacés ensemble pendant une certaine période d'observation courant jusqu'à l'instant d'estimation de la position du terminal 70i d'intérêt.

La phase 40 de recherche comporte une étape de détermination 42 d'une signature radio pour un terminal 70i d'intérêt dont on souhaite estimer la position géographique. Cette étape est similaire à celle décrite ci-avant en référence à la figure 2.

La phase 40 de recherche comporte aussi une étape de détermination 52, pour chaque terminal 70 d'un panel de terminaux 70 du système 60 de communication sans fil, d'une signature temporelle. La signature temporelle d'un terminal 70 comporte des valeurs mesurées de façon autonome par ledit terminal 70 par au moins un capteur du terminal 70 pendant une période d'observation passée dont la durée est prédéterminée en fonction de l'application considérée. Ces valeurs correspondent à des données liées à l'environnement dans lequel a évolué le terminal 70 ou bien liées au comportement qu'a eu le terminal 70 pendant ladite période d'observation.

La phase 40 de recherche comporte aussi une étape de calcul 54 de valeurs d'un critère de similarité entre les signatures temporelles des terminaux 70 du panel. Si deux signatures temporelles pour deux terminaux 70 ont des similarités importantes, cela signifie que les deux terminaux 70 en question se sont probablement déplacés ensemble, ou bien éventuellement qu'ils sont restés au même endroit, pendant la période d'observation.

La phase 40 de recherche comporte aussi une étape de partitionnement 56, des différents terminaux 70 du panel en différents groupes en fonction du critère de similarité.

Enfin, la phase 40 de recherche comporte une étape d'estimation 44 de la position géographique du terminal 70i d'intérêt en fonction de données de géolocalisation disponibles pour au moins un autre terminal 70 d'un groupe, dit « groupe d'intérêt », auquel le terminal 70i d'intérêt appartient.

Les différentes étapes de la phase 40 de recherche sont décrites ci-après en détails.

### 3. Détermination d'une signature temporelle

Différentes méthodes sont envisageables pour l'étape de détermination 52 d'une signature temporelle d'un terminal 70 du panel considéré.

Dans un mode particulier de mise en œuvre, la signature temporelle d'un terminal 70 comporte des valeurs représentatives des phases de mobilité dudit terminal 70 pendant la période d'observation. Les phases de mobilité sont par exemple déterminées à l'aide de mesures réalisées par un capteur de mouvement du terminal 70 tel qu'un accéléromètre, ou bien à partir de capteurs permettant de mesurer des valeurs de l'environnement du terminal (température, pression atmosphérique, luminosité, champ magnétique, etc.).

On entend par « phase de mobilité » un intervalle de temps pendant lequel le terminal 70 est considéré comme étant en train de se déplacer. Deux phases de mobilité successives sont séparées par une phase d'immobilité, qui correspond à un intervalle de temps pendant lequel le terminal est considéré comme étant immobile.

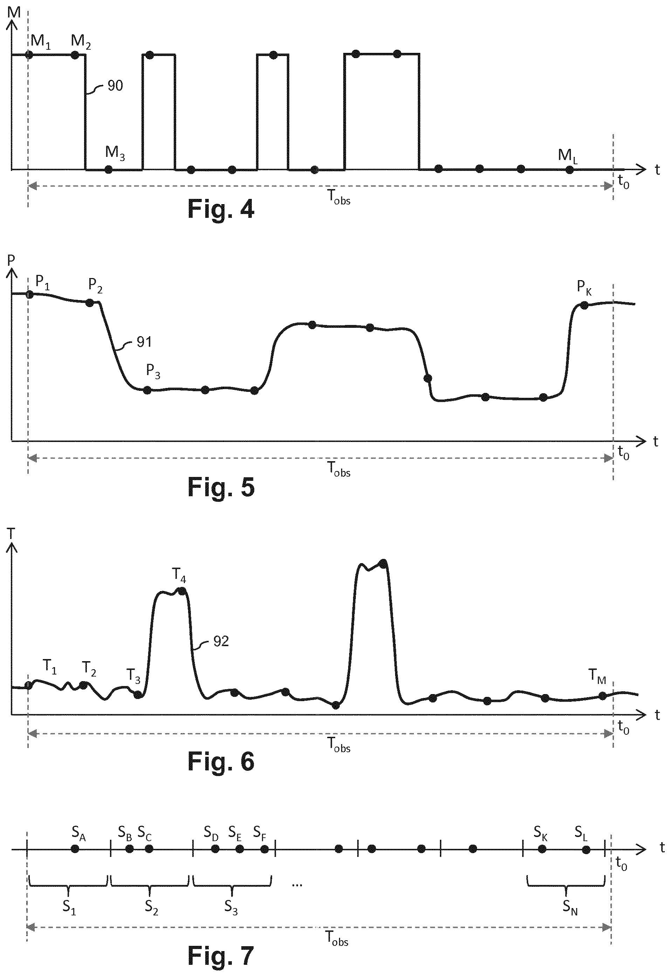

La figure 4 représente schématiquement des phases de mobilité d'un terminal 70 du système 60 de communication sans fil pendant une période d'observation $T_{obs}$. La période d'observation $T_{obs}$ précède un instant $t_0$ correspondant par exemple à l'instant où la position géographique d'un terminal 70i d'intérêt est estimée par le procédé 10 de géolocalisation. L'instant $t_0$ correspond généralement à un instant de réception d'un message émis par le terminal 70i d'intérêt, message à partir duquel une signature radio du terminal 70i d'intérêt est déterminée à l'étape 42 de la phase 40 de recherche.

La courbe 90 de la figure 4 représente les phases de mobilité du terminal 70. Lorsque la courbe 90 prend une valeur constante non nulle (par exemple la valeur 1), cela signifie que le terminal 70 est en mouvement (il est dans une phase de mobilité). Lorsque la courbe prend une valeur nulle (valeur 0), cela signifie que le terminal 70 est immobile (il est dans une phase d'immobilité).

La courbe 90 peut être construite, par exemple par le serveur 82, à l'aide d'informations remontées par le terminal 70 dans des messages émis à destination du réseau d'accès 80.

A cet effet, le terminal 70 comporte un capteur de mouvement, par exemple un accéléromètre, et un ensemble de moyens conventionnels configurés de façon logicielle (produit programme d'ordinateur) et ou matérielle (un ou des circuits logiques programmable de type FPGA et/ou un ou des circuits intégrés spécialisés de type ASIC, etc.) pour déterminer des instants de début et des instants de fin respectifs de phases de mobilité du terminal 70. Par exemple, une mesure d'accélération est réalisée de manière récurrente par le capteur (par exemple avec une période comprise entre quelques dizaines de millisecondes et quelques centaines de millisecondes) et si la valeur mesurée est supérieure à un seuil prédéterminé de détection de mouvement, un instant de détection courant est mémorisé et comparé à l'instant de détection précédent. Si les deux instants de détection sont séparés d'une durée inférieure à un seuil prédéterminé de détection d'une nouvelle phase de mobilité, alors il est considéré que les deux instants de détection appartiennent à la même phase de mobilité. Si en revanche les deux instants de détection sont séparés d'une durée supérieure au seuil de détection d'une nouvelle phase de mobilité, alors il est considéré que l'instant de détection précédent correspond à l'instant de fin d'une phase de mobilité, et l'instant de détection courant correspond à l'instant de début d'une nouvelle phase de mobilité.

Les instants de début et les instants de fin des phases de mobilité du terminal 70 sont par exemple mémorisés puis envoyés au serveur 82 dans des messages émis de manière récurrente par le terminal 70 à destination du réseau d'accès 80. De tels messages peuvent par exemple être émis périodiquement, ou bien à chaque détection d'une nouvelle phase de mobilité.

A partir de la courbe 90, le serveur 82 peut déterminer une signature temporelle pour le terminal 70 pour la période d'observation $T_{obs}$, par exemple en échantillonnant un ensemble de valeurs $(M_1, M_2, M_3, ..., M_L)$. La période d'échantillonnage est choisie de manière appropriée en fonction des durées typiques des phases de mobilité et des phases d'immobilité du terminal 70 pour l'application considérée. Pour une période d'observation fixe, plus le nombre L de valeurs est grand, plus on a d'information sur les mouvements effectués par le terminal 70, et plus la signature temporelle est précise.

En utilisant le même échantillonnage sur la même période d'observation pour tous les terminaux 70 du panel considéré, il est alors possible de comparer les signatures temporelles des différents terminaux 70 deux à deux. Si deux terminaux 70 présentent des signatures temporelles similaires cela signifie qu'ils ont eu des phases de mobilité similaires pendant la période d'observation, et en conséquence cela signifie qu'ils se sont probablement déplacés ensemble.

Dans un mode particulier de mise en œuvre, la signature temporelle d'un terminal 70 comporte des valeurs représentatives de la pression atmosphérique à laquelle est soumis ledit terminal 70. Ces valeurs sont par exemple mesurées par un capteur de pression atmosphérique du terminal 70.

La figure 5 représente une courbe 91 de l'évolution de la pression atmosphérique à laquelle est soumis un terminal 70 pendant une période d'observation $T_{obs}$ précédant un instant $t_0$ d'estimation de la position géographique d'un terminal 70i d'intérêt.

La courbe 91 est par exemple construite par le serveur 82 à l'aide de mesures de pression atmosphérique réalisées par le terminal 70 et envoyées au serveur 82 dans des messages émis à destination du réseau d'accès 80 de manière récurrente.

A partir de la courbe 91, le serveur 82 peut déterminer une signature temporelle pour le terminal 70 pour la période d'observation $T_{obs}$, par exemple en échantillonnant un ensemble de valeurs $(P_1, P_2, P_3, ..., P_K)$. Là encore, la période d'échantillonnage (et donc le nombre K de valeurs échantillonnées pendant la période d'observation $T_{obs}$) est choisie de manière appropriée en fonction de l'application considérée.

Par exemple, si des palettes de marchandises équipées avec des terminaux 70 sont transportées par avion, il est intéressant de distinguer des phases de transport aérien correspondant aux périodes où la pression atmosphérique est basse (en raison de l'altitude élevée de l'avion), et des phases au sol correspondant aux périodes où la pression atmosphérique est plus élevée. La période d'échantillonnage peut alors être choisie en fonction des durées typiques des phases de transport aérien et des phases au sol.

En utilisant le même échantillonnage sur la même période d'observation pour tous les terminaux 70 du panel considéré, il est alors possible de comparer les signatures temporelles des différents terminaux 70 deux à deux. Si deux terminaux 70 présentent des signatures temporelles similaires cela signifie qu'ils ont eu des phases de transport aérien similaires pendant la période d'observation, et en conséquence cela signifie qu'ils se sont probablement déplacés ensemble.

Il convient de noter que d'autres méthodes sont possibles pour déterminer une signature temporelle à partir de la courbe 91. Par exemple, il est possible de découper la période d'observation $T_{obs}$ en différents intervalles de temps, et de déterminer une valeur pour chacun des intervalles, comme par exemple la valeur moyenne prise par la courbe 91 sur un intervalle de temps, ou bien la valeur minimale ou la valeur maximale.

Dans un mode particulier de mise en œuvre, la signature temporelle d'un terminal 70 comporte des valeurs représentatives de la température à laquelle est soumise ledit terminal 70. Ces valeurs sont par exemple mesurées par un capteur de température du terminal 70.

La figure 6 représente une courbe 92 de l'évolution de la température à laquelle est soumise un terminal 70 pendant une période d'observation $T_{obs}$ précédant un instant $t_0$ d'estimation de la position géographique d'un terminal 70i d'intérêt.

La courbe 92 est par exemple construite par le serveur 82 à l'aide de mesures de température réalisées par le terminal 70 et envoyées au serveur 82 dans des messages émis à destination du réseau d'accès 80.

A partir de la courbe 92, le serveur 82 peut déterminer une signature temporelle pour le terminal 70 pour la période d'observation $T_{obs}$, par exemple en échantillonnant un ensemble de valeurs $(T_1, T_2, T_3, ..., T_M)$. Là encore, la période d'échantillonnage est choisie de manière appropriée en fonction de l'application considérée.

Par exemple, si des palettes de marchandises équipées avec des terminaux 70 sont transportées par camion frigorifique, il est intéressant de distinguer des phases où la température est basse (palettes localisées dans une chambre froide ou dans un camion frigorifique), et des phases où la température est plus élevée (palettes en train d'être chargées ou déchargées d'un camion frigorifique). La période d'échantillonnage est alors par exemple choisie en fonction des durées typiques des phases où la température est élevée.

En utilisant le même échantillonnage sur la même période d'observation pour tous les terminaux 70 du panel considéré, il est alors possible de comparer les signatures temporelles des différents terminaux deux à deux. Si deux terminaux présentent des signatures temporelles similaires cela signifie qu'ils ont été soumis à des changements de température similaires au cours de la période d'observation, et en conséquence cela signifie qu'ils se sont probablement déplacés ensemble.

Dans un mode particulier de mise en œuvre, la signature temporelle d'un terminal 70 comporte des signatures radio déterminées pour ledit terminal 70 à différents instants pendant la période d'observation.

La figure 7 représente schématiquement des signatures radio $S_A$, $S_B$, $S_C$, ..., $S_L$ déterminées pendant une durée d'observation $T_{obs}$ précédant un instant $t_0$ d'estimation de la position géographique d'un terminal 70i d'intérêt. Chaque signature radio est par exemple déterminée à partir de mesures RSSI effectuées par des stations de base 81 du système 60 de communication sans fil lors à la réception de messages émis par le terminal 70 à différents instants pendant la période d'observation $T_{obs}$.

Il est par exemple possible de déterminer une signature temporelle pour le terminal 70 en découpant la période d'observation $T_{obs}$ en N intervalles de temps de durée identique, et en définissant une signature radio $S_1$, $S_2$, ..., $S_N$ pour chacun desdits intervalles de temps en fonction des signatures radio $S_A$, $S_B$, ..., $S_L$ appartenant audit intervalle de temps. Chaque composante d'une signature radio $S_1$, $S_2$, ..., $S_N$ est par exemple définie comme la valeur moyenne (ou maximale, minimale, etc.) des valeurs RSSI des composantes correspondantes des signatures radio $S_A$, $S_B$, ..., $S_L$ appartenant à l'intervalle de temps correspondant. Par exemple, sur la figure 7, la signature radio $S_3$ correspondant au troisième intervalle de temps de la période d'observation $T_{obs}$ comporte un ensemble de valeurs $(RSSI_{3,1}, RSSI_{3,2}, ..., RSSI_{3,Q})$, et chaque composante $RSSI_{3,i}$ est égale à la moyenne des composantes correspondantes $RSSI_{D,i}$, $RSSI_{E,i}$, et $RSSI_{F,i}$ des signatures radio $S_D$, $S_E$ et $S_F$ respectivement. La signature temporelle pour le terminal 70 pendant la période d'observation $T_{obs}$ est alors l'ensemble des valeurs $(S_1, S_2, S_3, ..., S_N)$. A chaque signature radio $S_i$, $i \in \{1..N\}$, est par exemple associé un temps de mesure $t_i$ correspondant à l'instant situé au milieu de l'intervalle de temps utilisé pour déterminer $S_i$.

En procédant de même pour tous les terminaux 70 du panel considéré, il est alors possible de comparer les signatures temporelles des différents terminaux deux à deux. Si deux terminaux présentent des signatures temporelles similaires cela signifie qu'ils ont été confrontés à des conditions radio similaires au cours de la période d'observation, et en conséquence cela signifie qu'ils se sont probablement déplacés ensemble.

Il convient de noter qu'au lieu d'utiliser des intervalles de temps distincts pour définir les signatures radio $S_1$, $S_2$, ..., $S_N$, il est possible d'utiliser un mécanisme de fenêtre temporelle glissante pour lequel une signature radio $S_A$, $S_B$, ..., $S_L$ est impliquée pour plusieurs positions de ladite fenêtre glissante. Chaque signature radio $S_1$, $S_2$, ..., $S_N$ de la signature temporelle correspond alors à une convolution entre la position de la fenêtre glissante et les signatures radio $S_A$, $S_B$, ..., $S_L$.

Il convient également de noter que d'autres mesures environnementales pourraient être utilisées pour définir la signature temporelle d'un terminal 70, comme par exemple un niveau de luminosité, une intensité de champ magnétique, etc. Le choix d'un type particulier de mesures pour définir une signature temporelle ne constitue qu'une variante de mise en œuvre de l'invention.

Dans des modes particuliers de mise en œuvre, la signature temporelle d'un terminal 70 est une combinaison de plusieurs ensembles de valeurs correspondant à des mesures environnementales différentes. Par exemple, la signature temporelle d'un terminal 70 comporte à la fois les valeurs $(M_1, M_2, M_3, ..., M_L)$ décrites en référence à la figure 4 et les valeurs $(S_1, S_2, S_3, ..., S_N)$ décrites en référence la figure 7.

## 4. Détermination d'un critère de similarité

Différentes méthodes sont envisageables pour l'étape de calcul 54 de valeurs d'un critère de similarité entre les signatures temporelles des terminaux 70 du panel considéré.

Considérons le cas où la signature temporelle d'un terminal 70 comporte les valeurs $(M_1, M_2, M_3, ..., M_L)$ décrites en référence à la figure 4 représentatives des phases de mobilité dudit terminal 70 pendant la période d'observation $T_{obs}$. Pour rappel, chaque valeur $M_i$ vaut respectivement 1 ou 0 selon que le terminal 70 est ou non dans une phase de mobilité à un instant $t_i$.

Si l'on considère deux terminaux 70 différents, notés A et B, et présentant respectivement les signatures temporelles $(M_1, M_2, ..., M_L)$ et $(M_1', M_2', ..., M_L')$, il est par exemple possible de définir un critère de similarité, notée $SIM_M(A,B)$, entre les deux signatures temporelles par les formules suivantes :

$$SIM_M(A, B) = \sum_{i=1}^{L} W_i \cdot D^{-1}(M_i, M_i') \qquad (1)$$

$$W_i = e^{-(t_0 - t_i)} \qquad (2)$$

$$D^{-1}(M_i, M_i') = C \cdot M_i \cdot M_i' \qquad (3)$$

Dans la formule (3), C est une constante définie par exemple en fonction du nombre L et d'un ordre de grandeur souhaité pour $SIM_M(A,B)$ (qui prend dans ce cas ses valeurs entre 0 et L x C).

Dans la formule (2), $t_i$ correspond à l'instant associé aux mesures $M_i$ et $M_i'$. Le terme $W_i$ est ainsi un facteur de pondération qui permet d'accorder plus d'importance aux mesures récentes. Ceci est avantageux par exemple si deux terminaux se sont déplacés ensemble pendant seulement une partie de la période d'observation. Il convient en effet dans ce cas d'accorder plus d'importance aux données récentes afin de déterminer si à la fin de la période d'observation, c'est-à-dire à l'instant $t_0$ où l'estimation de la position géographique du terminal 70i d'intérêt est faite, les terminaux en question sont ensemble ou non, c'est-à-dire si oui ou non il faut considérer qu'ils appartiennent à un même groupe.

Ainsi, une valeur élevée pour $SIM_M(A,B)$ signifie que les signatures temporelles des terminaux A et B sur la période d'observation $T_{obs}$ sont semblables, ce qui signifie qu'il y a une probabilité forte que les terminaux A et B se soient déplacés ensemble pendant la période d'observation, et plus particulièrement vers la fin de la période d'observation.

Considérons maintenant le cas, tel que décrit en référence à la figure 6, où la signature temporelle d'un terminal 70 comporte des valeurs de température, il est par exemple possible de définir un critère de similarité, notée $SIM_T(A,B)$, entre les deux signatures temporelles de deux terminaux A et B en utilisant les formules suivantes :

$$SIM_T(A, B) = \sum_{i=1}^{M} W_i \cdot D^{-1}(T_i, T_i') \qquad (4)$$

$$W_i = e^{-(t_0 - t_i)} \qquad (5)$$

$$D^{-1}(T_i, T_i') = \frac{1}{\max(|T_i - T_i'|, sat)} \qquad (6)$$

Le terme sat dans la formule (6) est une constante de faible valeur (par exemple égale à 0,5°C pour l'exemple considéré) destinée à éviter une division par 0 dans la cas où la même température est mesurée pour les deux terminaux A et B à l'instant $t_i$.

Considérons maintenant le cas, tel que décrit à la figure 7, où la signature temporelle d'un terminal 70 comporte des signatures radio. Considérons par exemple deux terminaux 70 différents, notés A et B, et présentant respectivement les signatures temporelles $(S_1, S_2, ..., S_N)$ et $(S_1', S_2', ..., S_N')$. Chaque signature radio $S_i$ déterminée à un instant $t_i$ correspond à un ensemble de niveaux RSSI $(RSSI_{i,1}, RSSI_{i,2}, ..., RSSI_{i,Q})$ mesurés par un nombre Q de stations de base 81.

Il est par exemple possible de définir un critère de similarité, notée $SIM_S(A,B)$, entre les deux signatures temporelles par les formules suivantes :

$$SIM_S(A, B) = \sum_{i=1}^{N} W_i \cdot D^{-1}(S_i, S_i') \qquad (7)$$

$$W_i = e^{-(t_0 - t_i)} \qquad (8)$$

$$D^{-1}(S_i, S_i') = \frac{1}{\max(\sum_{j=1}^{Q} |RSSI_{i,j} - RSSI_{i,j}'|, sat)} \qquad (9)$$

Dans la formule (9), le terme sat est une constante utilisée pour éviter une division par 0 et ainsi borner la valeur de $SIM_S(A,B)$.

Dans les formules (3), (6) et (9), la fonction $D^{-1}$ représente l'inverse d'une distance séparant deux composantes d'une signature temporelle. Il convient de noter que d'autres fonctions pourraient être choisies pour définir une telle distance. De la même manière, d'autres fonctions pourraient être choisies pour définir un facteur $W_i$ de pondération en fonction du temps écoulé. Un tel choix ne constitue qu'une variante de mise en œuvre de l'invention.

Dans un mode particulier de mise en œuvre, la signature temporelle d'un terminal 70 comporte à la fois des valeurs représentatives des phases de mobilité du terminal 70 (telles que celles décrites en référence à la figure 4) et des signatures radio du terminal déterminées à différents instants pendant la période d'observation (telles que celles décrites en référence la figure 7). Un critère de similarité $SIM(A,B)$ peut alors par exemple être défini comme une combinaison convexe d'un critère de similarité $SIM_M(A,B)$ pour les phases de mobilité et d'un critère de similarité $SIM_S(A,B)$ pour les signatures radio :

$$SIM(A, B) = \beta \cdot SIM_M(A, B) + (1 - \beta) \cdot SIM_S(A, B) \quad (10)$$

$$\beta = \frac{1}{M \cdot b} \cdot \sum_{i=1}^{M} M_i \cdot M_i' \cdot e^{-\frac{(t_0 - t_i)}{b^2}} \quad (11)$$

Dans la formule (11), $M$ est le nombre de valeurs $M_i$ et $M_i'$ dans les signatures temporelles représentatives des phases de mobilité des terminaux A et B, et b est une valeur constante positive. Pour rappel, chaque valeur $M_i$ vaut respectivement 1 ou 0 selon que le terminal 70 est ou non dans une phase de mobilité à un instant $t_i$.

Ainsi, le facteur $\beta$ prend une valeur plus forte si les terminaux A et B ont eu des phases de mobilité similaires en des instants proches de $t_0$, et il prend une valeur faible dans le cas contraire. $\beta$ joue ainsi un rôle de facteur de pondération dans le calcul de $SIM(A,B)$ en accordant plus d'importance à $SIM_M(A,B)$ par rapport à $SIM_S(A,B)$ lorsque les terminaux A et B ont été en mouvement ensemble en des instants proches de $t_0$. Au contraire, le facteur $\beta$ accorde plus d'importance à $SIM_S(A,B)$ par rapport à $SIM_M(A,B)$ lorsque les terminaux A et B n'ont pas eu de phases de mobilité similaires en des instants proches de $t_0$. Il est ainsi possible d'accorder plus ou moins d'importance aux similarités concernant les phases de mobilité par rapport à celles concernant l'environnement radio selon que les terminaux ont eu ou non des phases de mobilité similaires récemment par rapport à l'instant $t_0$ d'estimation de la position d'un terminal 70i d'intérêt.

## 5. Partitionnement des terminaux

Différentes méthodes sont envisageables pour l'étape 56 de partitionnement 56 des terminaux 70 du panel considéré en différents groupes en fonction du (ou des) critère(s) de similarité précédemment déterminé(s).

L'objectif de cet étape est de déterminer des groupes de terminaux qui ont une probabilité élevée de s'être déplacés ensemble au cours de la période d'observation $T_{obs}$ précédant l'instant $t_0$ d'estimation de la position géographique d'un terminal 70i d'intérêt. Il s'agit donc de grouper ensemble des terminaux 70 pour lesquels les valeurs de similarité deux à deux sont particulièrement élevées.

Il existe plusieurs méthodes connues pour diviser les terminaux 70 du panel considéré en différents groupes homogènes, en ce sens que les terminaux 70 de chaque groupe partagent des similarités (c'est-à-dire que la valeur du critère de similarité entre deux terminaux d'un même groupe est relativement grande).

Par exemple, les méthodes dites « centroïdes » telles que les algorithmes des « k-moyennes » ou « k-médoïdes » définissent des points particuliers de l'espace des mesures considéré, dits « points centraux », qui maximisent la similarité entre un point central et les terminaux 70 du groupe. De telles méthodes associent généralement un terminal 70 à un groupe au plus (méthodes dites de « *hard clustering* » dans la littérature anglo-saxonne). Si un terminal 70 n'a pas de similarité suffisante avec d'autres terminaux 70 du panel, il n'est associé à aucun groupe et reste isolé.

Dans une variante, certaines méthodes de partitionnement associent un terminal 70 à plusieurs groupes selon un certain degré correspondant à une probabilité pour ledit terminal 70 d'appartenir à un groupe (méthodes dites de « *soft clustering* » dans la littérature anglo-saxonne).

Dans les modes de mise en œuvre où la signature temporelle d'un terminal 70 est une combinaison de deux ensembles de valeurs indépendants, comme par exemple la combinaison de valeurs représentatives de phases de mobilité et de signatures radio, plusieurs méthodes sont possibles pour faire le partitionnement.

Selon un premier exemple, le partitionnement est fait en fonction d'un seul critère de similarité prenant en compte les deux ensembles, comme par exemple celle définie ci-avant par la formule (10).

Selon un deuxième exemple, un partitionnement peut être fait pour chaque ensemble indépendant selon un critère de similarité qui lui est propre, et un consensus peut être opéré entre les différents partitionnements obtenus.

Un troisième exemple repose sur une « indépendance conditionnelle » entre des partitionnements effectués selon les critères de similarité qui sont propres à chaque ensemble. Par exemple, un partitionnement est fait pour l'un des deux ensembles à partir d'un critère de similarité $SIM_1$ qui lui est propre. On obtient alors par exemple, pour un terminal A, un vecteur $P_A = (p_{A1}, p_{A2}, p_{A3}, ..., p_{AK})$ où $p_{Ai}$ représente la probabilité d'appartenance du terminal A au groupe d'indice $i$. Puis, les valeurs prises par un critère de similarité $SIM_2$ propre à l'autre ensemble sont modifiées en fonction du partitionnement obtenu, par exemple comme suit :

$$SIM_2(A,B) = \begin{cases} 0 & si \ P_A^T \cdot P_B \leq p_c \\ SIM_2(A,B) & sinon \end{cases} \qquad (12)$$

où $p_c$ est un seuil prédéterminé. Puis un partitionnement final est fait à partir des valeurs de similarité ainsi modifiées pour le critère $SIM_2$.

Les méthodes présentées ci-avant pour faire un partitionnement 56 des terminaux 70 du panel ont été données à titre d'exemples nullement limitatifs. D'autres méthodes pourraient être envisagées, et le choix d'une méthode particulière ne constitue qu'une variante de l'invention.

## 6. Détermination d'un panel de terminaux

Le panel à considérer pour les étapes 52, 54 et 56 peut par exemple être déterminé par une sélection des terminaux 70 du système 60 de communication sans fil dont on sait a priori qu'ils sont proches (géographiquement parlant) du terminal 70i d'intérêt, ou qu'ils ont une certaine propension à appartenir à un groupe de plusieurs terminaux 70.

Dans des modes particuliers de mise en œuvre, ne sont sélectionnés dans le panel que les terminaux 70 qui, lors de l'émission de leur dernier message avant l'instant $t_0$, étaient sous la couverture d'au moins une station de base 81 du système 60 de communication sans fil qui couvre également le terminal 70i d'intérêt à l'instant $t_0$.

Dans des modes particuliers de mise en œuvre, on note BS l'ensemble des $N_{bs}$ stations de base 81 qui ont reçu le message émis par le terminal 70i d'intérêt à l'instant $t_0$, on note $N_{mvt}(A)$ le nombre de phases de mobilité d'un terminal A pendant la période d'observation $T_{obs}$, et on définit par exemple :

$$P_{radio}(A) = \sqrt[N_{bs}]{\prod_{bs \in BS} \left( \sum_{B \neq A} \frac{1}{\max(|RSSI_{A,bs} - RSSI_{B,bs}|, \ sat)} \right)} \qquad (13)$$

$$P_{mvt}(A) = \frac{1}{\sigma \cdot \sqrt{2\pi}} \cdot e^{-\sum_{B \neq A} \frac{(N_{mvt}(A) - N_{mvt}(B))^2}{2 \cdot \sigma^2}} \qquad (14)$$

$$P_{tot}(A) = \sqrt{P_{radio}(A) \cdot P_{mvt}(A)} \qquad (15)$$

Ne sont alors sélectionnés dans le panel que les terminaux pour lesquels $P_{tot}(A)$ est supérieur à un seuil prédéterminé.

Dans la formule (13), $RSSI_{X,bs}$, $bs \in BS$, est le niveau RSSI mesuré par la station de base $bs$ pour le dernier message émis par un terminal X avant $t_0$. $P_{radio}(A)$ est ainsi une valeur représentative d'une probabilité pour un terminal A de trouver, parmi d'autres terminaux 70 du système 60, des terminaux 70 présentant un environnement radio proche de celui du terminal A.

Dans la formule (14), $\sigma$ correspond par exemple à l'écart-type des valeurs $N_{mvt}(X)$. $P_{mvt}(A)$ est ainsi une valeur représentative d'une probabilité pour un terminal A de trouver, parmi d'autres terminaux 70 du système 60, des terminaux 70 présentant un nombre de phases de mobilité pendant la période $T_{obs}$ proche de celui du terminal A.

Le terme $P_{tot}(A)$ défini par la formule (15) représente ainsi une propension pour un terminal A de trouver, parmi d'autres terminaux 70 du système 60, des terminaux 70 qui ont été soumis à des conditions similaires en termes d'environnement radio et en termes de déplacements. Autrement dit, plus $P_{tot}(A)$ est grand, et plus la probabilité de pouvoir grouper le terminal A avec d'autres terminaux 70 du système 60 est forte.

Il convient de noter que les méthodes présentées ci-avant pour déterminer un panel de terminaux 70 ont été donné à titre d'exemples nullement limitatifs. Aussi, le choix d'une méthode particulière ne constitue qu'une variante de la présente invention.

## 7. Estimation de la position géographique d'un terminal d'intérêt

La phase 40 de recherche du procédé 10 de géolocalisation selon l'invention comporte une étape d'estimation 44 de la position géographique du terminal 70i d'intérêt en fonction de données de géolocalisation disponibles pour au moins un autre terminal 70 d'un groupe, dit « groupe d'intérêt », auquel le terminal 70i d'intérêt appartient.

Dans la suite de la description, on considère à titre d'exemple non limitatif que la signature temporelle d'un terminal 70 est une combinaison de valeurs représentatives des phases de mobilité et de signatures radio dudit terminal 70 pendant une période d'observation $T_{obs}$ précédant un instant $t_0$ d'estimation de la position du terminal 70i d'intérêt. On considère, de manière avantageuse, que l'instant $t_0$ correspond à un instant de réception par le serveur 82 d'un message émis par ledit terminal 70i d'intérêt pendant une phase d'immobilité.

On considère également qu'un panel de terminaux 70 est déterminé selon l'une quelconque des méthodes décrites ci-avant.

On considère également qu'un critère de similarité tel que celui décrit ci-avant par la formule (10) est utilisé pour faire un partitionnement des terminaux 70 du panel.

On considère également qu'une position géographique d'un terminal 70 du panel peut être estimée en utilisant par exemple un algorithme conventionnel de géolocalisation tel que celui décrit en référence à la figure 2. Comme cela a déjà été mentionné précédemment, une telle estimation de la position géographique peut être complexe et relativement peu précise, notamment quand la zone géographique à couvrir est vaste et/ou que le nombre de terminaux et/ou de stations de base est élevé.

La suite de la description présente à titre d'exemples non limitatifs plusieurs méthodes pour estimer avec plus de précision et/ou avec moins de complexité la position géographique du terminal 70i d'intérêt à l'aide du partitionnement obtenu et de données de géolocalisation fournies par un ou plusieurs terminaux 70 du groupe d'intérêt, voire d'autres groupes.

Dans des modes de mise en œuvre particuliers, les données de géolocalisation sont des positions GPS fournies par des terminaux 70c de calibration équipés d'un récepteur GPS.

Selon un premier exemple, le terminal 70i d'intérêt est associé à un seul groupe (méthode dite de « *hard clustering* »), et au moins un terminal 70c de calibration appartenant à ce groupe a fourni sa position GPS via un message envoyé au réseau d'accès 80 à un instant précédant $t_0$ depuis lequel il n'a pas bougé. La position géographique du terminal 70i d'intérêt est alors associée à ladite position GPS (ou bien à une moyenne de plusieurs positions GPS disponibles pour le groupe).

Selon un deuxième exemple, le terminal 70i d'intérêt est associé à plusieurs groupes avec une certaine probabilité d'appartenance à chaque groupe (méthode dite de « *soft clustering* »), et une position géographique est attribuée à chaque groupe à partir d'au moins une position GPS fournie par un terminal 70c de calibration dudit groupe (ou éventuellement en moyennant plusieurs positions GPS disponibles pour le groupe). Soit $X_k$ la position géographique attribuée à un groupe $k$, $x_j^k$ la position GPS d'un terminal 70c de calibration noté $j$ d'un groupe k, et $p_{jk}$ la probabilité d'appartenance du terminal $j$ au groupe $k$. Alors, la position $Y_i$ d'un terminal 70i d'intérêt noté $i$ est déterminée en fonction des positions géographiques attribuées aux groupes et en fonction des probabilités d'appartenance du terminal 70i d'intérêt aux différents groupes selon les formules suivantes :

$$X_k = \frac{\sum_j p_{jk} \cdot x_j^k}{\sum_j p_{jk}} \qquad (16)$$

$$Y_i = \frac{\sum_k p_{ik} \cdot X_k}{\sum_k p_{ik}} \qquad (17)$$

Dans des modes de mise en œuvre particuliers, les données de géolocalisation sont des positions géographiques de terminaux 70 estimées par un algorithme conventionnel de géolocalisation tel que celui décrit en référence à la figure 2. De préférence, lesdites positions géographiques sont estimées à partir de messages émis en des instants relativement proches de $t_0$ à partir desquels les terminaux 70 ne se sont plus déplacés.

Par exemple, le terminal 70i d'intérêt est associé à un seul groupe (« *hard clustering* ») et la position géographique du terminal 70i d'intérêt est déterminée en fonction d'une ou plusieurs positions géographiques estimées des autres terminaux 70 de ce groupe, par exemple en moyennant les positions géographiques estimées des différents terminaux 70 du groupe, éventuellement en écartant certaines positions estimées jugées aberrantes par rapport aux autres, ou bien en privilégiant certaines positions géographiques estimées par rapport à d'autres selon les niveaux RSSI des signatures radio associées, etc.

Selon un autre exemple, le terminal 70i d'intérêt est associé à plusieurs groupes avec une certaine probabilité d'appartenance à chaque groupe (« *soft clustering* »), et une position géographique est attribuée à chaque groupe à partir des positions géographiques estimées des terminaux 70 dudit groupe, puis la position géographique du terminal 70i d'intérêt est estimée de manière similaire à la méthode précédemment décrite à l'aide de la formule (17).

Dans des modes de mise en œuvre particuliers, le terminal 70i d'intérêt est associé à un seul groupe (« *hard clustering* ») et les données de géolocalisation sont des signatures radio de terminaux 70. De préférence, lesdites signatures radio sont déterminées à partir de messages émis en des instants relativement proches de $t_0$ à partir desquels les terminaux 70 ne se sont plus déplacés. Une signature radio virtuelle est alors déterminée pour le groupe auquel appartient le terminal 70i d'intérêt, par exemple en moyennant chaque composante des signatures radio, ou bien en prenant pour chaque composante la valeur maximale des signatures radio, etc. La position géographique du terminal 70i d'intérêt est alors estimée de manière conventionnelle à partir de la signature radio virtuelle et de l'ensemble 26 d'éléments de référence.

Il convient de noter que dans le cas très particulier où le terminal 70i d'intérêt n'appartient à aucun groupe, par exemple parce qu'il ne présente pas suffisamment de similarité avec d'autres terminaux 70 du panel, il faut se contenter d'une estimation médiocre de la position géographique qui ne tire pas profit des informations liées au partitionnement.

## 8. Conclusion

La description ci-avant illustre clairement que, par ses différentes caractéristiques et leurs avantages, la présente invention atteint les objectifs fixés.

En particulier, le procédé de géolocalisation selon l'invention apporte un gain en termes de précision de géolocalisation par rapport aux procédés selon l'art antérieur.

En effet, dans certains modes de mise en œuvre, la position d'un terminal 70i d'intérêt peut être déterminée directement à partir d'une ou plusieurs positions GPS de terminaux 70c de calibration appartenant au groupe auquel appartient le terminal 70i d'intérêt.

Dans d'autres modes de mise en œuvre, des données GPS ne sont pas disponibles pour estimer la position d'un terminal d'intérêt, et il convient alors par exemple d'utiliser comme données de géolocalisation des positions géographiques d'autres terminaux 70 du système estimées par un procédé conventionnel de géolocalisation à partir de signatures radio. Même dans ce cas la précision de géolocalisation d'un terminal 70i d'intérêt est grandement améliorée par rapport à un procédé conventionnel grâce à la mise en corrélation des différentes informations disponibles pour les terminaux 70 appartenant au groupe auquel appartient le terminal 70i d'intérêt.

L'invention est particulièrement bien adaptée quand la zone géographique à couvrir est vaste (par exemple s'il s'agit de couvrir une ville, un pays, voire un continent) et/ou que le nombre de terminaux est élevé (par exemple de plusieurs milliers à plusieurs centaines de milliers de terminaux) et/ou que le nombre de stations de base est élevé (par exemple plusieurs dizaines, voire plusieurs centaines, voire même plusieurs milliers de stations de base).

La complexité du procédé de géolocalisation est également améliorée en termes de temps et de capacité de calcul. Par exemple, il est possible de déterminer la position géographique de tous les terminaux 70 d'un groupe en leur attribuant une même position géographique (correspondant à une position géographique du groupe) estimée à partir de la position géographique de seulement un terminal ou quelques terminaux appartenant audit groupe.

De manière générale, il est à noter que les modes de mise en œuvre et de réalisation considérés ci-dessus ont été décrits à titre d'exemples non limitatifs, et que d'autres variantes sont par conséquent envisageables.

Notamment, plusieurs méthodes existent pour déterminer une signature radio pour un terminal 70 : à partir de niveaux RSSI d'un signal échangé entre le terminal 70 et une station de base 81, à partir d'un temps de propagation d'un signal échangé entre le terminal 70 et une station de base 81, etc. Le choix d'une méthode particulière n'est qu'une variante de l'invention.

Aussi, plusieurs méthodes existent pour déterminer une signature temporelle pour un terminal 70. Le choix d'un type particulier de mesure (détection de phases de mobilité, valeurs de température, de pression, etc.) n'est qu'une variante de l'invention.

De la même manière, plusieurs méthodes existent pour déterminer un critère de similarité entre deux signatures temporelles. Le choix d'une méthode particulière n'est qu'une variante de l'invention.

Plusieurs méthodes sont également envisageables pour partitionner les terminaux 70 en plusieurs groupes en fonction d'un critère de similarité, ou bien pour déterminer un panel de terminaux 70 à partitionner. Là encore, le choix d'une méthode particulière n'est qu'une variante de l'invention.

Aussi, différents types de données de géolocalisation fournies par certains terminaux 70 du système sont envisageables. Une position GPS d'un terminal 70 a été donnée comme exemple de donnée de géolocalisation, mais d'autres données de géolocalisation sont envisageables. Par exemple, l'adresse MAC (acronyme anglais de « *Medium Access Control* ») d'un point d'accès Wi-Fi auquel un terminal 70 est connecté peut jouer le rôle de donnée de géolocalisation si la position géographique dudit point d'accès est connue.

Le concept de l'invention peut également être appliqué au cas de la géolocalisation d'un seul terminal 70i d'intérêt au cours du temps, indépendamment d'autres terminaux 70 du système 60. Dans le cas par exemple où aucune phase de mobilité du terminal 70i d'intérêt n'est détectée entre deux instants $t_1$ et $t_2$ auxquels correspondent respectivement des signatures radio $S_1$ et $S_2$, si les deux signatures radio $S_1$ et $S_2$ sont similaires, alors elles peuvent être toutes les deux utilisées pour estimer une seule et même position du terminal 70i d'intérêt. Par extension, un groupe de $N \geq 2$ signatures radio $S_i$ similaires et déterminées à des instants $t_i$ (l'indice i variant entre 1 et N) entre lesquels le terminal 70i d'intérêt n'a pas bougé peut être utilisé. Une telle approche peut permettre d'améliorer la précision de l'estimation de la position géographique du terminal 70i d'intérêt ainsi que corriger des estimations effectuées dans le passé. Si en revanche des signatures radio ne sont pas similaires, on peut supposer qu'une phase de mobilité a été manquée et il convient d'estimer une position géographique différente pour chaque signature radio.

L'invention a été décrite à titre d'exemple en considérant un système 60 de communication sans fil de type IoT pour une application dans le domaine de la logistique (transport de palettes équipées avec des terminaux du système 60 de communication IoT). Rien n'exclut cependant, suivant d'autres exemples, de considérer d'autres système de communication sans fil, comme par exemple des réseaux de téléphonie mobiles, et d'autres applications éventuellement dans d'autres domaines industriels.

### Revendications

1. Procédé (10) d'estimation de la position géographique d'un terminal, dit « terminal (70i) d'intérêt », parmi un panel de terminaux (70) d'un système (60) de communication sans fil, **caractérisé en ce que** ledit procédé comporte :

   - une détermination (52), pour chaque terminal (70) dudit panel, d'une signature temporelle comportant des valeurs représentatives de phases de mobilité dudit terminal (70) mesurées de façon autonome par le terminal (70) par au moins un capteur du terminal (70) pendant une durée d'observation prédéterminée, les mesures représentatives de phases de mobilité du terminal ne dépendant pas du comportement d'un autre dispositif,
   - un calcul (54) de valeurs d'un critère de similarité entre les signatures temporelles des terminaux (70) du panel, une valeur dudit critère de similarité calculée pour deux terminaux (70) étant représentative de la probabilité pour lesdits terminaux (70) de s'être déplacés ensemble pendant ladite période d'observation,
   - un partitionnement (56) des différents terminaux (70) du panel en différents groupes en fonction des valeurs du critère de similarité,
   - une estimation (44) de la position géographique du terminal (70i) d'intérêt en fonction de données de géolocalisation disponibles pour au moins un autre terminal (70) du groupe, dit « groupe d'intérêt », auquel le terminal (70i) d'intérêt appartient.

2. Procédé (10) selon la revendication 1 dans lequel lesdites valeurs mesurées par au moins un capteur du terminal (70) comportent :

   - des valeurs mesurées par un capteur de mouvement, et/ou
   - des valeurs mesurées par un capteur de température, et/ou
   - des valeurs mesurées par un capteur de pression atmosphérique, et/ou
   - des valeurs mesurées par un capteur de luminosité, et/ou
   - des valeurs mesurées par un capteur de champ magnétique.

3. Procédé (10) selon la revendication 2 dans lequel une signature temporelle d'un terminal (70) comporte en outre des signatures radio comportant des valeurs représentatives de la qualité de liens radio existant entre le terminal (70) et une ou plusieurs stations de base (81) du système (60) de communication sans fil à différents instants pendant la période d'observation, et dans lequel le critère de similarité est déterminé en fonction d'un critère de similarité relatif aux phases de mobilité et d'un critère de similarité relatif aux signatures radio.

4. Procédé (10) selon l'une des revendications 1 à 3 dans lequel un critère de similarité est déterminé en fonction d'un facteur de pondération affecté à une valeur mesurée représentatif du temps écoulé entre l'instant où ladite valeur est mesurée et l'instant d'estimation (44) de la position géographique du terminal (70i) d'intérêt.

5. Procédé (10) selon l'une des revendications 1 à 4 dans lequel le partitionnement (56) des différents terminaux (70) du panel est fait de sorte que chaque terminal (70) appartient au plus à un groupe.

6. Procédé (10) selon l'une des revendications 1 à 4 dans lequel le partitionnement (56) des différents terminaux (70) du panel est fait de sorte que chaque terminal (70) appartient à chaque groupe selon une valeur de probabilité d'appartenance, le groupe d'intérêt correspondant au groupe pour lequel la valeur de probabilité d'appartenance du terminal (70i) d'intérêt est la plus grande.

7. Procédé (10) selon la revendication 6 dans lequel la position géographique du terminal (70i) d'intérêt est estimée en fonction de données de géolocalisation disponibles pour différents terminaux (70) appartenant à différents groupes et en fonction des valeurs de probabilité d'appartenance du terminal (70i) d'intérêt aux différents groupes.

8. Procédé (10) selon l'une des revendications 1 à 7 dans lequel lesdites données de géolocalisation sont fournies par un terminal (70) sous la forme d'une position géographique obtenue par un système de positionnement par satellites dudit terminal.

9. Procédé (10) selon l'une des revendications 1 à 7 dans lequel des données de géolocalisation sont disponibles pour un terminal (70) sous la forme d'une signature radio comportant des valeurs représentatives de la qualité de liens radio existant entre ledit terminal (70) et une ou plusieurs stations de base (81) du système (60) de communication sans fil.

10. Procédé (10) selon la revendication 9 dans lequel une position géographique d'un terminal (70) est estimée en fonction de la signature radio dudit terminal (70) et d'un ensemble (26) de référence comportant des signatures radio associées à des positions géographiques connues, et dans lequel la position géographique du terminal (70i) d'intérêt est estimée en fonction de la position géographique estimée d'au moins un autre terminal (70) du groupe d'intérêt.

11. Procédé (10) selon la revendication 9 dans lequel une signature radio virtuelle est déterminée pour le groupe d'intérêt en fonction des signatures radio des terminaux (70) appartenant audit groupe d'intérêt, et la position du terminal (70i) d'intérêt est estimée en fonction de ladite signature radio virtuelle.

12. Procédé (10) selon l'une des revendications 1 à 11 dans lequel ledit panel de terminaux (70) est déterminé par une étape de sélection parmi les terminaux (70) du système (60) de communication sans fil de sorte qu'un terminal (70) du panel soit couvert par au moins une station de base (81) du système (60) de communication sans fil couvrant également le terminal (70i) d'intérêt.

13. Système (60) de communication sans fil comportant des terminaux (70) et un réseau d'accès (80) comportant des stations de base (81) et un serveur (82) relié auxdites stations de base (81), ledit système 60 étant **caractérisé en ce qu'**il met en œuvre un procédé de géolocalisation d'un terminal (70i) d'intérêt, parmi un panel de terminaux (70), selon l'une des revendications 1 à 13, ledit serveur (82) étant configuré pour :

- collecter des valeurs représentatives de phases de mobilité d'un terminal (70) dudit panel mesurées de façon autonome par ledit terminal (70) par au moins un capteur du terminal (70) pendant une durée d'observation prédéterminée, les mesures représentatives de phases de mobilité du terminal ne dépendant pas du comportement d'un autre dispositif,
- déterminer une signature temporelle pour ledit terminal (70) à partir des valeurs mesurées,
- calculer des valeurs d'un critère de similarité entre les signatures temporelles des terminaux (70) du panel, une valeur dudit critère de similarité calculée pour deux terminaux (70) étant représentative de la probabilité pour lesdits terminaux (70) de s'être déplacés ensemble pendant ladite période d'observation,
- partitionner les différents terminaux (70) du panel en différents groupes en fonction des valeurs du critère de similarité,
- estimer la position géographique du terminal (70i) d'intérêt en fonction de données de géolocalisation disponibles pour au moins un autre terminal (70) du groupe, dit « groupe d'intérêt », auquel le terminal (70i) d'intérêt appartient.

**Patentansprüche**

1. Verfahren (10) zum Schätzen der geografischen Position eines Endgeräts, das "Endgerät (70i) von Interesse", aus einer Reihe von Endgeräten (70) eines drahtlosen Kommunikationssystems (60), **dadurch gekennzeichnet, dass** das Verfahren Folgendes aufweist:

Bestimmen (52), für jedes Endgerät (70) der Reihe, einer zeitlichen Signatur, die Werte aufweist, die repräsentativ für Mobilitätsphasen des Endgeräts (70) sind und von dem Endgerät (70) während einer vorbestimmten Beobachtungsdauer autonom durch mindestens einen Sensor des Endgeräts (70) gemessen werden, wobei die für Mobilitätsphasen des Endgeräts repräsentativen Messungen nicht von dem Verhalten einer anderen Vorrichtung abhängig sind,
Berechnen (54) von Werten eines Ähnlichkeitskriteriums zwischen den zeitlichen Signaturen der Endgeräte (70) der Reihe, wobei ein Wert des für zwei Endgeräte (70) berechneten Ähnlichkeitskriteriums repräsentativ für die Wahrscheinlichkeit ist, dass sich die Endgeräte (70) während des Beobachtungszeitraums gemeinsam bewegt haben, Aufteilen (56) der verschiedenen Endgeräte (70) der Reihe in verschiedene Gruppen in Abhängigkeit von den Werten des Ähnlichkeitskriteriums,

Schätzen (44) der geografischen Position des Endgeräts (70i) von Interesse in Abhängigkeit von Geolokalisierungsdaten, die für mindestens ein anderes Endgerät (70) der Gruppe, der "Gruppe von Interesse", verfügbar sind, zu der das Endgerät (70i) von Interesse gehört.

2. Verfahren (10) nach Anspruch 1, wobei die durch mindestens einen Sensor des Endgeräts (70) gemessenen Werte Folgendes aufweisen:

- von einem Bewegungssensor gemessene Werte, und/oder
- von einem Temperatursensor gemessene Werte, und/oder
- von einem Luftdrucksensor gemessene Werte, und/oder
- von einem Lichtsensor gemessene Werte, und/oder
- von einem Magnetfeldsensor gemessene Werte.

3. Verfahren (10) nach Anspruch 2, wobei eine zeitliche Signatur eines Endgeräts (70) ferner Funksignaturen aufweist, die Werte aufweisen, die repräsentativ für die Qualität der zwischen dem Endgerät (70) und einer oder mehreren Basisstationen (81) des drahtlosen Kommunikationssystems (60) zu verschiedenen Zeitpunkten während des Beobachtungszeitraums bestehenden Funkverbindungen sind, und wobei das Ähnlichkeitskriterium in Abhängigkeit von einem Ähnlichkeitskriterium bezüglich der Mobilitätsphasen und einem Ähnlichkeitskriterium bezüglich der Funksignaturen bestimmt wird.

4. Verfahren (10) nach einem der Ansprüche 1 bis 3, wobei ein Ähnlichkeitskriterium in Abhängigkeit von einem Gewichtungsfaktor bestimmt wird, der einem Messwert zugeordnet ist, der repräsentativ für die Zeit ist, die zwischen dem Zeitpunkt, zu dem der Wert gemessen wird, und dem Zeitpunkt des Schätzens (44) der geografischen Position des Endgeräts (70i) von Interesse verstrichen ist.

5. Verfahren (10) nach einem der Ansprüche 1 bis 4, wobei das Aufteilen (56) der verschiedenen Endgeräte (70) der Reihe so erfolgt, dass jedes Endgerät (70) höchstens zu einer Gruppe gehört.

6. Verfahren (10) nach einem der Ansprüche 1 bis 4, wobei das Aufteilen (56) der verschiedenen Endgeräte (70) der Reihe so erfolgt, dass jedes Endgerät (70) zu jeder Gruppe gemäß einem Wert der Zugehörigkeitswahrscheinlichkeit gehört, wobei die Gruppe von Interesse der Gruppe entspricht, für die der Wert der Zugehörigkeitswahrscheinlichkeit des Endgeräts (70i) von Interesse am höchsten ist.

7. Verfahren (10) nach Anspruch 6, wobei die geografische Position des interessierenden Endgeräts (70i) in Abhängigkeit von Geolokalisierungsdaten, die für verschiedene Endgeräte (70) verfügbar sind, die zu verschiedenen Gruppen gehören, und in Abhängigkeit von den Werten der Zugehörigkeitswahrscheinlichkeit des Endgeräts (70i) von Interesse zu den verschiedenen Gruppen geschätzt wird.

8. Verfahren (10) nach einem der Ansprüche 1 bis 7, wobei die Geolokalisierungsdaten von einem Endgerät (70) in Form einer von einem Satellitenpositionierungssystem des Endgeräts erhaltenen geografischen Position bereitgestellt werden.

9. Verfahren (10) nach einem der Ansprüche 1 bis 7, wobei Geolokalisierungsdaten für ein Endgerät (70) in Form einer Funksignatur verfügbar sind, die repräsentative Werte für die Qualität der zwischen dem Endgerät (70) und einer oder mehreren Basisstationen (81) des drahtlosen Kommunikationssystems (60) bestehenden Funkverbindungen aufweist.

10. Verfahren (10) nach Anspruch 9, wobei eine geografische Position eines Endgeräts (70) in Abhängigkeit von der Funksignatur des Endgeräts (70) und einer Referenzgruppe (26) mit Funksignaturen, die mit bekannten geografischen Positionen verbunden sind, geschätzt wird, und wobei die geografische Position des Endgeräts (70i) von Interesse in Abhängigkeit von der geschätzten geografischen Position mindestens eines anderen Endgeräts (70) der Gruppe von Interesse geschätzt wird.

11. Verfahren (10) nach Anspruch 9, wobei eine virtuelle Funksignatur für die Gruppe von Interesse in Abhängigkeit von den Funksignaturen der Endgeräte (70), die zu der Gruppe von Interesse gehören, bestimmt wird, und die Position des Endgeräts (70i) von Interesse in Abhängigkeit von der virtuellen Funksignatur geschätzt wird.

12. Verfahren (10) nach einem der Ansprüche 1 bis 11, wobei die Reihe der Endgeräte (70) durch einen Auswahlschritt aus den Endgeräten (70) des drahtlosen Kommunikationssystems (60) bestimmt wird, so dass ein Endgerät (70) der Reihe von mindestens einer Basisstation (81) des drahtlosen Kommunikationssystems (60) abgedeckt wird, die auch das Endgerät (70i) von Interesse abdeckt.

13. Drahtloses Kommunikationssystem (60), das Endgeräte (70) und ein Zugangsnetz (80) mit Basisstationen (81) und einem Server (82), der mit den Basisstationen (81) verbunden ist, aufweist, wobei das System 60 **dadurch gekennzeichnet ist, dass** es ein Verfahren zur Geolokalisierung eines Endgeräts (70i) von Interesse aus einer Reihe von Endgeräten (70) nach einem der Ansprüche 1 bis 13 implementiert, wobei der Server (82) für Folgendes konfiguriert ist:

- Erfassen von Werten, die repräsentativ für Mobilitätsphasen eines Endgeräts (70) der Reihe sind und von dem Endgerät (70) während einer vorbestimmten Beobachtungsdauer autonom durch mindestens einen Sensor des Endgeräts (70) gemessen werden, wobei die für Mobilitätsphasen des Endgeräts repräsentativen Messungen nicht von dem Verhalten einer anderen Vorrichtung abhängig sind,
- Bestimmen einer zeitlichen Signatur für das Endgerät (70) anhand der gemessenen Werten,
- Berechnen von Werten eines Ähnlichkeitskriteriums zwischen den zeitlichen Signaturen der Endgeräte (70) der Reihe, wobei ein Wert des für zwei Endgeräte (70) berechneten Ähnlichkeitskriteriums repräsentativ für die Wahrscheinlichkeit ist, dass sich die Endgeräte (70) während des Beobachtungszeitraums gemeinsam bewegt haben,
- Aufteilen der verschiedenen Endgeräte (70) der Reihe in verschiedene Gruppen in Abhängigkeit von den Werten des Ähnlichkeitskriteriums,
- Schätzen der geografischen Position des Endgeräts (70i) von Interesse in Abhängigkeit von Geolokalisierungsdaten, die für mindestens ein anderes Endgerät (70) der Gruppe, der "Gruppe von Interesse", verfügbar sind, zu der das Endgerät (70i) von Interesse gehört.

## Claims

1. Method (10) for estimating the geographical position of a terminal, called "terminal (70i) of interest", from a panel of terminals (70) of a wireless communication system (60), **characterized in that** said method comprises:

   - determining (52), for each terminal (70) of said panel, a time signature comprising values representative of phases of mobility of said terminal (70) measured independently by the terminal (70) by at least one sensor of the terminal (70) during a predetermined observation period, wherein the measurements representative of the mobility phases of the terminal do not depend on the behavior of another device,
   - calculating (54) values of a criterion of similarity between the time signatures of the terminals (70) of the panel, a value of said criterion of similarity calculated for two terminals (70) being representative of the probability of said terminals (70) having moved together during said period of observation,
   - partitioning (56) the various terminals (70) of the panel into various groups according to the values of the criterion of similarity,
   - estimating (44) the geographical position of the terminal (70i) of interest according to geolocation data available for at least one other terminal (70) of the group, called "group of interest", to which the terminal (70i) of interest belongs.

2. Method (10) according to claim 1, wherein said values measured by at least one sensor of the terminal (70) comprise:

   - values measured by a motion sensor, and/or
   - values measured by a temperature sensor, and/or
   - values measured by an atmospheric-pressure sensor, and/or
   - values measured by a luminosity sensor, and/or
   - values measured by a magnetic-field sensor.

3. Method (10) according to claim 2, wherein a time signature of a terminal (70) further comprises radio signatures comprising values representative of the quality of radio links existing between the terminal (70) and one or more base stations (81) of the wireless communication system (60) at various times during the observation period, and wherein the similarity criterion is determined according to a similarity criterion relative to the phases of mobility and a similarity criterion relative to the radio signatures.

4. Method (10) according to any one of claims 1 to 3, wherein a similarity criterion is determined according to a weighting factor assigned to a measured value representative of the time that has passed between the time at which said value is measured and the time of estimation (44) of the geographical position of the terminal (70i) of interest.

5. Method (10) according to any one of claims 1 to 4, wherein the partitioning (56) of the various terminals (70) of the panel is carried out so that each terminal (70) belongs at most to one group.

6. Method (10) according to any one of claims 1 to 4, wherein the partitioning (56) of the various terminals (70) of the panel is carried out so that each terminal (70) belongs to each group according to a value of probability of belonging, the group of interest corresponding to the group for which the value of probability of belonging of the terminal (70i) of interest is the greatest.

7. Method (10) according to claim 6, wherein the geographical position of the terminal (70i) of interest is estimated according to geolocation data available for various terminals (70) belonging to various groups and according to the values of probability of the terminal (70i) of interest belonging to the various groups.

8. Method (10) according to any one of claims 1 to 7, wherein said geolocation data is provided by a terminal (70) in the form of a geographical position obtained by a satellite positioning system of said terminal.

9. Method (10) according to any one of claims 1 to 7, wherein the geolocation data is available for a terminal (70) in the form of a radio signature comprising values representative of the quality of radio links existing between said terminal (70) and one or more base stations (81) of the wireless communication system (60).

10. Method (10) according to claim 9, wherein a geographical position of a terminal (70) is estimated according to the radio signature of said terminal (70) and a reference set (26) comprising radio signatures associated with known geographical positions, and wherein the geographical position of the terminal (70i) of interest is estimated according to the estimated geographical position of at least one other terminal (70) of the group of interest.

11. Method (10) according to claim 9, wherein a virtual radio signature is determined for the group of interest according to the radio signatures of the terminals (70) belonging to said group of interest, and the position of the terminal (70i) of interest is estimated according to said virtual radio signature.

12. Method (10) according to any one of claims 1 to 11, wherein said panel of terminals (70) is determined by a step of selection among the terminals (70) of the wireless communication system (60) so that a terminal (70) of the panel is covered by at least one base station (81) of the wireless communication system (60) also covering the terminal (70i) of interest.

13. Wireless communication system (60) comprising terminals (70) and an access network (80) comprising base stations (81) and a server (82) connected to said base stations (81), said system (60) being **characterized in that** it implements a method for geolocating a terminal (70i) of interest, from a panel of terminals (70), according to any one of claims 1 to 13, said server (82) being configured to:

- collect values representative of phases of mobility of a terminal (70) of said panel, measured independently by said terminal (70) by at least one sensor of the terminal (70) during a predetermined observation period, wherein the measurements representative of the mobility phases of the terminal do not depend on the behavior of another device,
- determine a time signature for said terminal (70) on the basis of the measured values,
- calculate values of a criterion of similarity between the time signatures of the terminals (70) of the panel, a value of said similarity criterion calculated for two terminals (70) being representative of the probability of said terminals (70) having moved together during said period of observation,
- partition the various terminals (70) of the panel into various groups according to the values of the similarity criterion,
- estimate the geographical position of the terminal (70i) of interest according to geolocation data available for at least one other terminal (70) of the group, called "group of interest", to which the terminal (70i) of interest belongs.

60

70i ?

70

81

70

80

70

82

81

70c

81

70

70c

81

70

## Fig. 1

Phase de calibration

Phase de recherche

70c

70i ?

10

| Détermination d'une signature radio | 22 |

| Détermination d'une signature radio | 42 |

20

40

| Stockage de l'élément de référence (position + signature) | 24 |

| Estimation de la position | 44 |

26 R

Position estimée

## Fig. 2

Phase de calibration

Phase de recherche

**Fig. 3**

Fig. 4

Fig. 5

Fig. 6

Fig. 7

**EP 3 769 105 B1**

## RÉFÉRENCES CITÉES DANS LA DESCRIPTION

**Documents brevets cités dans la description**

- WO 2015188324 A1